# EUROPEAN PATENT SPECIFICATION

(11) **EP 0 620 631 B1**
(45) Date of publication and mention of the grant of the patent: **04.12.1996**
(21) Application number: 94104383.8
(22) Date of filing: 21.03.1994
(51) Int. Cl.: H02J 3/14, G05B 19/04

(54) **Management system for domestic electric loads**
Kontrollsystem für elektrische Hausgeräte
Système de contrôle pour appareils électroménagers

(30) Priority: 15.04.1993 IT PN930026
(43) Date of publication of application: 19.10.1994
(73) Proprietor: ZELTRON S.p.A., I-33030 Campoformido, Udine (IT)
(72) Inventor: Rugo, Anna, I-33038 San Daniele Del Friuli, Udine (IT); Diodato, Claudio, I-33100 Udine (IT)
(74) Representative: Busca, Luciano

(56) References cited:
- EP-A- 0 099 043
- EP-A- 0 208 597
- EP-A- 0 466 152
- FR-A- 2 672 400

## Description

The present invention relates to a system for automatically managing the power input to a plurality of domestic electric loads, so as to prevent the electric loads from causing excessive total power peaks to be absorbed.

To this purpose, a number of solutions are known including a central control unit capable of driving a set of loads, connected to an electric power network, so as to distribute over the time the power supplied to the loads when a concurrent operation of the same loads would involve excessive peaks in the total power absorbed. Generally, the central unit comprises a computerized arrangement enabling a limited number of electric loads to be supplied concurrently, according to a predetermined priority sequence, so as to keep the total power consumption within a predetermined maximum value.

Arrangements of this kind are for instance disclosed in EP-0 307 383, US-A-3 906 242 and WO-A-88 02583, wherein the central control unit drives the loads, that are associated to respective receivers, with encoded control signals which can be transmitted by means of TV cables, telephone cables, conveyed waves, or by means of radio-frequency signals.

Such systems, which are based on a priority sequence herein defined as "ON-OFF" sequence, suffer from several drawbacks, particularly where the loads consist of relevant domestic appliances which in the common practice may be operated concurrently. First of all, it may easily happen that the central control unit determines certain appliances to be excluded when a user would on the contrary like them to work. In any case, an appliance to which a low priority has been assigned may only be supplied when the duty cycle of one or more appliances having higher priority is terminated, thereby involving waiting periods that may be undesirably long-lasting.

The prior systems referred to above may bring about an important inconvenience in case a user at first actuates at least an appliance (e.g., a dishwasher) having lower priority and later on (e.g., while the dishwasher is heating up the wash water) operates an appliance (e.g., a cooking oven) having higher priority. At that time it may happen that, in order to shave a peak in the power absorbed, the automatic management system temporarily deenergizes the lower priority appliance. As a consequence, the previously heated water in the dishwasher cools down during such an interruption and must be heated again when the management system re-starts the dishwasher. The consequent energy loss should be apparent.

It is known, in addition, that transmission of relatively complex control signals by means of conveyed waves or radio-frequency signals is subject to disturbances that may affect the correct operation of the whole system. Such disturbances are substantially eliminated where the central unit controls the loads via suitable TV or telephone cables, which however remarkably complicate installation of the whole system, that in addition is undesirably expensive.

Installation may be simplified by using an infrared signalling system, as disclosed for example in FR-A-2 672 400, through which a central control unit is arranged to communicate with a plurality of domestic appliances. In particular, each appliance is arranged to drive the central unit with encoded enquiry signals which are indicative of the power demanded by its operative elements to perform the next working phase of a selected programme. The central unit is arranged to respond to the enquiry signals by driving with enabling signals, according to a programmed priority sequence, those appliances whose contemporary actuation during the concurrence of the respective next working phases involves a total power consumption not exceeding a predetermined maximum value.

A similar management system for domestic electric loads is also known by EP-A-0 099 043, teaching that in the case of appliances which have fluctuating load cycles only the heavy load processes need to be reported to the central control unit.

The management systems disclosed in FR-A-2 672 400 and EP-A-0 099 043 both effectively permit to keep the total power absorbed by the appliances below a predetermined maximum value, but not at all solve the above important problem of energy loss occurring in case a low priority appliance is deenergized when the latter has for instance already heated up wash water, or the like.

It is the main object of the present invention to provide a management system for domestic electric loads which not only can limit the total power absorbed by the appliances and minimize the waiting periods of the appliances having lower priority, but also can substantially avoid any energy loss.

Another object of the invention is to provide a management system of the type mentioned above which is relatively simple and reliable, without the need to use additional wirings.

According to the invention, these objects are attained in a management system for domestic electric loads embodying the features recited in the appended claims.

The characteristics and advantages of the invention will be more apparent from the following description, given only by way of non-limiting example, with reference to the accompanying drawings, wherein:
- Figure 1 diagrammatically shows a management system for electric loads according to a preferred embodiment of this invention, including a central control unit and a plurality of household appliances;
- Figure 2 is a block diagram of each of the appliances as in Figure 1;
- Figure 3 is a block diagram of the central unit as in Figure 1;
- Figures 4 and 5 are relevant portions (which have been split due to space reasons) of a flow-chart illustrating an exemplary operation of the system as in Figure 1; it should be noted that Figure 5 shows the prosecution of the flow-chart shown in Figure 4.

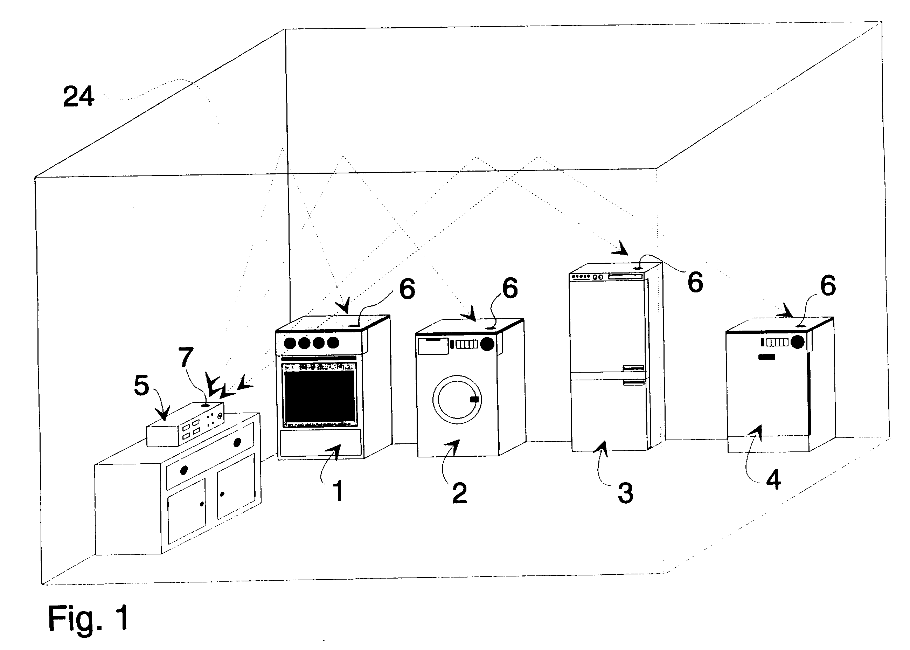

With reference to Figure 1, the management system according to the invention includes a plurality of domestic appliances for instance consisting of an electric cooking range (or oven) 1, a clothes washing machine 2, a refrigerator 3 and a dishwasher 4. The appliances are intended to be connected to an electric power supply network. Of course, a different number of appliances may be provided, which may also be of different type; for example, the domestic appliances may comprise an air conditioner, a water heater, etc. In addition, the system comprises a central control unit 5, that is also supplied by the power network.

As it will be clarified hereinafter, each domestic appliance 1 to 4 is provided with a relevant infrared transceiver device 6, by means of which it is capable of communicating bidirectionally with the central unit 5, through a similar infrared transceiver device 7 provided in correspondence of the central unit itself.

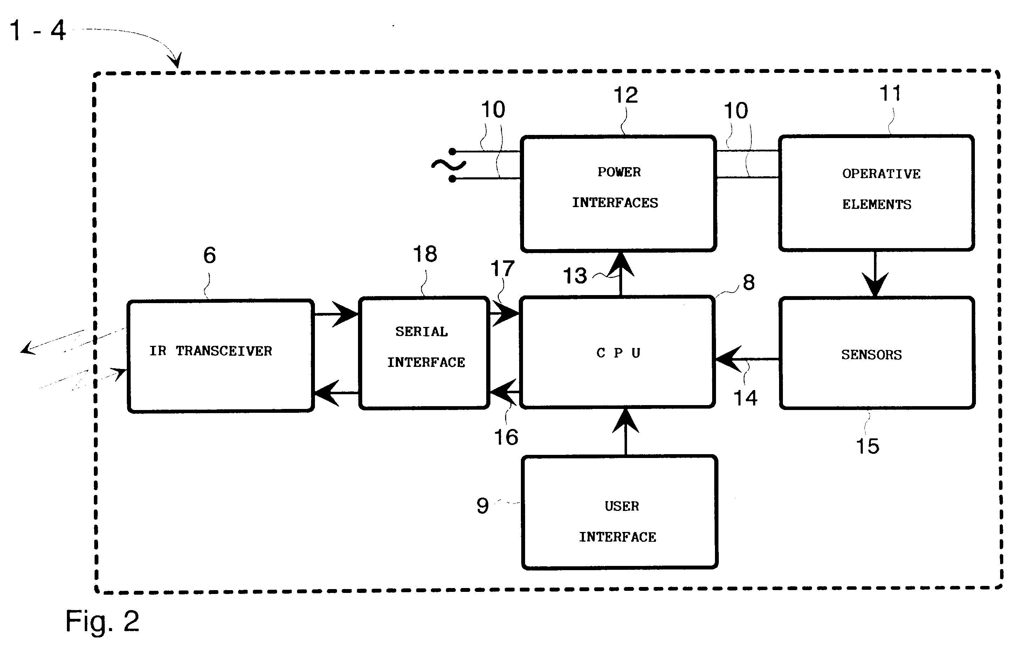

With reference to Figure 2, each appliance 1 to 4 is of the type including an electronic programmer which substantially consists of control means 8 and a user interface 9 (a push-button panel, for example) by means of which various operative programmes of the appliance may be set and/or selected. In a per se known manner, such operative programmes comprise one or more working phases of the operative elements of the appliance, forming relevant electric loads capable of absorbing a respective rated power from the supply network 10. The operative elements are diagrammatically shown at 11 in Figure 2 and are obviously different for each appliance. In the clothes washing machine 2, for example, the operative elements 11 shall basically comprise a water-fill solenoid valve, a heating resistance, a motor for driving a rotatable drum, a discharge pump, etc.

The control means 8 may for instance comprise a CPU based on a Motorola 68HC11, or NEC 78C10, microcontroller. According to the programme which may be selected, an output 13 of CPU 8 controls energization of the loads 11 through relevant power interfaces 12. A further input 14 of CPU 8 is driven by signals, from a plurality of sensors provided in the appliance, which are indicative of the values of relevant parameters of the programme possibly being carried out. The sensors are generally shown at 15 in Figure 2; in the washing machine 2, for example, they may comprise water-level sensors, temperature sensors, etc.

The CPU 8 also includes an output 16 and an input 17 respectively connected, through a serial interface 18, which is preferably an asynchronous serial interface, to a corresponding input and a corresponding output of the associated transceiver 6. The latter may comprise a SHARP GP1U521X receiving module, and an array of SHARP GL537 transmitting photodiodes.

In a per se known manner, in each appliance 1 to 4 the control means 8 are arranged to control energization of the loads 11, through output 13, provided that an enabling signal is received at input 17. More particularly, enabling signals are transmitted by the central unit 5 and are encoded (using a binary code, for example) with information identifying corresponding appliances, so that they can only be received by the transceivers 6 associated with the appliances whose operation is enabled by the central unit 5.

In addition, according to an aspect of the invention the control means 8 of each appliance are so arranged as to generate at output 16, upon a user's demand for operation of the appliance through the interface 9, enquiry signals which are encoded (using a binary code, for example) with information identifying that appliance. On the basis of information data stored in the CPU 8 and related to the rated values of the loads 11, said enquiry signals are indicative of the power demanded by the operative elements 11 to perform any subsequent working phase provided in the selected programme.

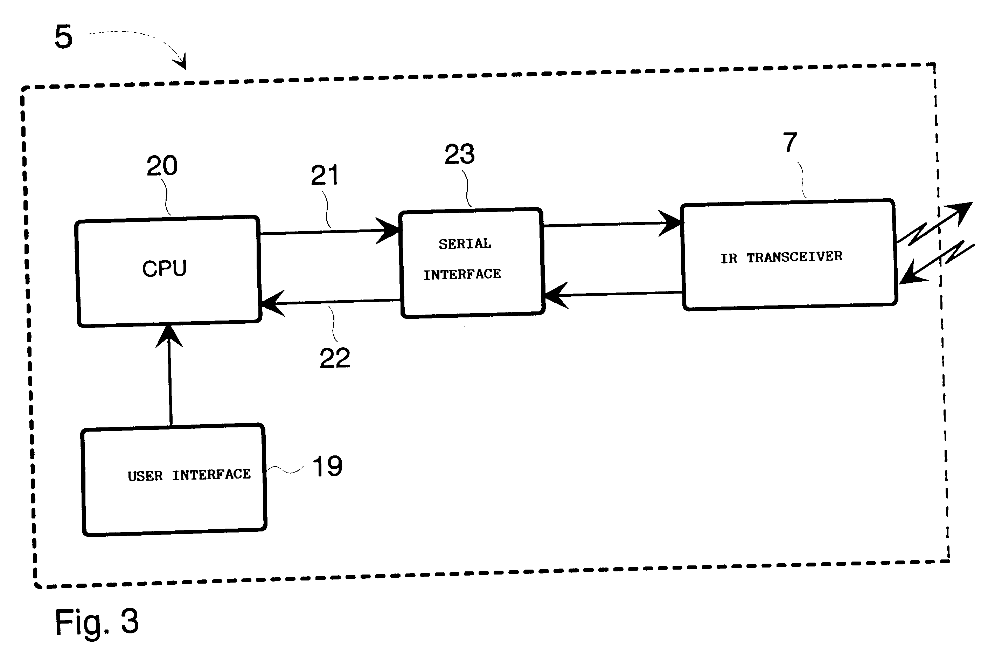

With reference to Figure 3, the central control unit 5 basically comprises a CPU 20 which may be based, like the control means 8, on a Motorola 68HC11, or NEC 78C10 microprocessor. In a per se known manner, the CPU may be programmed through an interface 19, including for instance a push-button panel.

Similarly to the control means 8, the CPU 20 includes an output 21 and an input 22 respectively connected, through a serial interface 23, which is preferably an asynchronous serial interface, to a corresponding input and a corresponding output of the associated transceiver 7. As already stated, the latter may comprise a SHARP GP1U521X receiving module, and an array of SHARP GL537 transmitting photodiodes.

In a per se known manner, the central unit 5 is capable of driving the appliances 1 to 4 with the said enabling signals, according to a priority sequence programmed through interface 19, so as to keep the total power concurrently absorbed by the appliances within a predetermined maximum value (e.g., 3 kW). In particular, the enabling signals are generated by CPU 20 at its output 21 and are transmitted to the transceivers 6 of the appliances 1 to 4 through the tranceiver 7. As described before, in every appliance identified by the encoded information contained in the enabling signals the control means 8 are enabled to energize the loads 11, through the power interfaces 12, according to the operative programme which has been selected through the push-button panel 9.

Thus, the management system will tend to permit concurrent operation of more than one appliances 1 to 4 (those whose operation is demanded by a user) provided that the total power consumption will not exceed said maximum value. Hence, if concurrent operation of several appliances would bring about excessive power demand, the central unit 5 transmits to the transceivers 6 enabling signals which are encoded so as to exclude operation of the appliances 1 to 4 having lower priority.

Generally, the mode of operation described hitherto is substantially known in the art, for example from the references referred to in the introduction.

However, according to an important aspect of this invention, when a user demands operation of an appliance 1 to 4 the latter transmits the said enquiry signals to the central unit 5 that are indicative of the power demanded by the appliance itself to carry out the next working phase of the selected operative programme. Hence, central unit 5 can determine, on the basis of the programmed priority sequence, which appliances will be able to work at the same time, during the concurrence of the relevant next working phases, with a total power consumption not exceeding the predetermined maximum value. In other words, whenever central unit 5 receives the enquiry signals it responds by driving with said enabling signals only those appliances that shall perform a working phase not causing an excessive total power consumption. If the total power consumption which would be involved during the concurrence of said working phases exceeds the maximum value, the central unit 5 temporarily excludes the appliances having lower priority from operation.

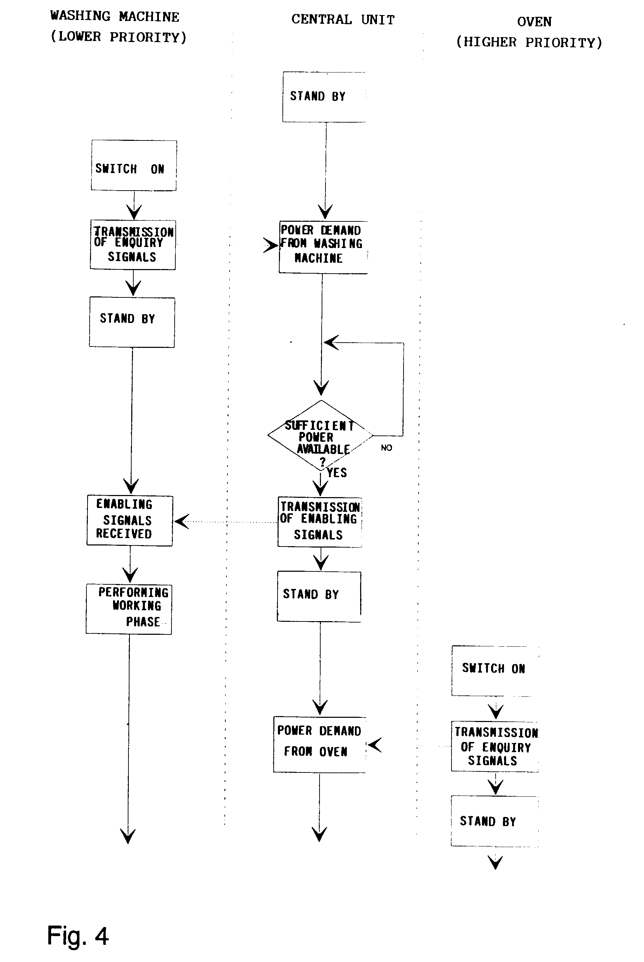

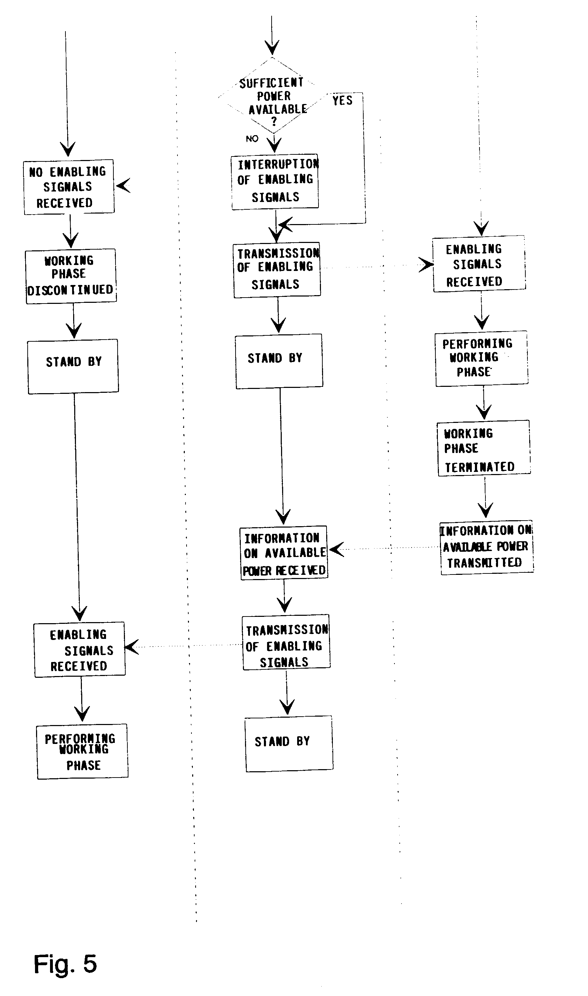

In conclusion, when the power demand exceeds the available power supply the management system of the invention is not confined to enabling operation of the lower-priority appliances only when higher-priority appliances have terminated their operating cycles. Quite differently from the "ON-OFF" prior solutions referred to above, in fact, the appliances temporarily excluded by the central unit 5 during given working phases of the higher-priority appliances can be energized, at least temporarily, during subsequent working phases of the higher-priority appliances in which a reduced power consumption is required. Such an operation is illustrated by way of example by the flow-chart shown in Figures 4 and 5 (relating to two appliances only) and advantageously permits the low-power working phases of the higher-priority appliances to be used to concurrently actuate even the lower-priority appliances possibly excluded in a former phase. Thus, the management system according to the invention is able to handle the power available on the supply network 10 in a "smart" manner, avoiding useless waiting periods in the operation of the lower-priority appliances.

The following example, in which reference is made to Figures 4 and 5, will clarify the operation of the management system of the invention in an elementary way. It is assumed that a user demands operation of the oven 1 (having higher priority) when the clothes-washing machine 2 (having lower priority) is performing a working phase (e.g., water heating) calling for high power input. If the enquiry signals that are received by central unit 5 indicate that concurrent actuation of both appliances would require an excessive total power consumption, the central unit 5 tends to respond by driving only the oven 1 with enabling signals, thereby interrupting operation of the washing machine 2. If, however, the oven 1 has to subsequently carry out a working phase involving lower power consumption (e.g., only a part of the heating elements of the oven are to be energized), it may happen that a total power demand not exceeding the predetermined maximum value is expected during the concurrence of the respective subsequent working phases of the appliances 1 and 2. The central unit 5 in this case enables concurrent operation of the two appliances until the said maximum power value is possibly exceeded. In conclusion, a period in which the oven 1 absorbs reduced power is used to supply the washing machine 2 with the remainder of the available power, without any need to first wait for the operative programme of the oven to terminate.

Preferably, the management system according to the invention is capable of discontinuing operation of a lower-priority appliance 1 to 4, in compliance with the programmed priority sequence, only in given cases, that is, provided that such an interruption has no negative effects with regard to energy saving. Such negative effects would occur, for example, if in response to the enquiry signals from the appliances 1 and 2 the operation of the washing machine 2 would be discontinued, in order to limit the total power consumption, when the machine is completing a water heating phase. Obviously, deenergization of the washing machine at that time would bring about undesirable energy losses. Thus, in at least one of the appliances 1 to 4 the control means 8 are arranged to generate at output 16, preferably in a continuous manner, also encoded (for example in binary form) state signals. Depending on the progress of the operative programme selected by the programmer 8, 9, as well as on the signals from the sensors 15 which are applied to input 14 of the CPU 8, said state signals are indicative of the opportunity, if any, of interrupting the programme being carried out, where the total available power is insufficient. Similarly to what has been described above, the state signals are transmitted by the transceiver 6 of the appliance to the transceiver 7 of the central unit, which accordingly may exclude from the programmed priority sequence the possibility of deenergizing the corresponding appliance which, in spite of its lower priority, has anyway to terminate the working phase being performed. In practice, the programmed priority sequence may be changed by the central unit 5 according to the state signals from the appliances 1 to 4. It should be apparent that in this way the management system is able to control operation of the appliances 1 to 4 in a particularly smart manner, thereby minimizing energy losses.

The CPUs 8 and 20 in the appliances and central unit, respectively, may be programmed and arranged, in order to determine the correlation among the enquiry signals, state signals, enabling signals and priority sequence, in a number of different manners per se falling within the general knowledge of a man skilled in the art and not forming part of this invention.

It should also be noticed that the transceivers 6 and 7 permit a bi-directional communication between the appliances 1 to 4 and the central unit 5 without requiring any additional wirings for interconnection thereof. Thanks to the transmission of the encoded signals in the form of infrared rays the whole system is also particularly reliable, in that, as is known, infrared transceiver arrangements are advantageously free from substantial disturbances.

To this aim, the transceivers 6 and 7 are preferably oriented as shown in Figure 1, so as to bi-directionally transmit the infrared signals through reflection thereof by means of a reference surface 24, which is preferably of light colour. Such a surface 24 may for instance consist of the ceiling of the room in which the appliances and the central unit are placed. As a consequence, the infrared rays extend in the room with a geometrical configuration which minimizes possible disturbances caused by persons or other objects moving in the room itself.

Obviously, the foregoing management system may be the subject of several modifications without departing from the scopes of the present invention.

For example, the central unit 5 may be built in one of the household appliances, e.g. the oven 1, instead of being arranged in the form of a separate module. In this case, of course, the central unit 5 shall be integrated with the programmer of that appliance, which shall not be provided with a relevant transceiver 6. The consequent structural simplification should be apparent.

## Claims

1. Management system for domestic electric loads, comprising a programmable central control unit (5) and a plurality of domestic appliances (1-4) which are provided with respective electronic programmers (8, 9) , are connectable to a power supply network and are capable of performing relevant selectable operative programmes formed by working phases of the associated operative elements, the central unit being arranged to drive the appliances with encoded enabling signals permitting them to operate, according to a programmed priority sequence, so as to keep the total power absorbed by the appliances below a predetermined maximum value, each appliance (1-4) comprising control means (8) associated with the respective programmer and arranged to drive the central unit (5) with encoded enquiry signals which are indicative of the power demanded by its operative elements to perform the next working phase of a selected programme, the central unit (5) being arranged to respond to said enquiry signals by driving with said enabling signals, according to said programmed priority sequence, those appliances (1-4) whose contemporary actuation during the concurrence of the respective next working phases involves a total power consumption not exceeding said maximum value, **characterized in that** the control means (8) of at least one of the appliances (1-4) are arranged to drive the central unit (5), during said working phases of the same appliance, with relevant encoded state signals in response to which the central unit is or is not enabled to discontinue, according to said programmed priority sequence, feeding the enabling signals to said at least one appliance.

2. Management system for domestic electric loads according to claim 1, in which the central unit (5) comprises infrared transceiver means (7) arranged to bi-directionally communicate with corresponding infrared transceiver means (6) which are each associated with a relevant appliance (1-4) so as to transmit and receive said encoded signals, **characterized in that** said transceiver means (6,7) are arranged to bi-directionally communicate through reflection of infrared rays by means of a reference surface (24).

3. Management system for domestic electric loads according to claim 1, **characterized in that** the central unit (5) is integrated with the programmer of one of the appliances (1) and comprises infrared transceiver means (7) arranged to bi-directionally communicate with corresponding infrared transceiver means (6), which are each associated with a relevant one of the remaining appliances (2-4), so as to transmit and receive said encoded signals.

## Patentansprüche

1. Kontrollsystem für elektrische Hausgeräte, das eine programmierbare zentrale Steuerungseinheit (5) und eine Vielzahl an Haushaltsgeräten (1-4) umfaßt, welche jeweils mit elektronischen Programmieiern (8,9) ausgestattet sind, mit einem Versorgtingsnetzwerk verbindbar sind, und dazu imstande sind, relevante auswählbare betriebene Programme durchzuführen, die durch Arbeitsphasen der assoziierten betriebenen Elemente gebildet werden, wobei die zentrale Einheit angeordnet ist, um die Geräte mit kodierten Steuersigtnalen, die ihnen erlauben zu funktionieren, zu betreiben, entsprechend einer programmnierten Prioritätsreihenfolge, um so die Gesamtleistung, die von den Geräten aufgenommen wird, unter einem vorbestimmten Maximalwert zu halten, wobei jedes Gerät (1-4) eine Steuereinrichtung (8), die mit dem jeweiligen Programmierer assoziiert wird und angeordnet ist, um die zentrale Einheit (5) mit kodierten Nachfragesignalen zu betreiben, welche die Leistung anzeigen, die von ihren betriebenen Elementen angefordert werden, um die nächste Arbeisphase eines ausgewählten Programmes durchzuführen, umfaßt, wobei die zentrale Einheit (5) angeordnet ist, um auf die Nachfragesignale durch Betreiben mit Steuersignalen entsprechend der programmierten Prioritätsreihenfolge zu antworten, wobei solche Geräte (1-4), deren zeitgemäße Bestätigung während der Gleichzeitigkeit der jeweiligen nächsten Arbeitsphasen einen Gesamtleistungsverbrauch einführt, der nicht den Maximalwert überschreitet, **gekennzeichnet dadurch, daß** die Steuereinrichtung (8) von mindestens einem der Geräte (1-4) angeordnet werden, um die zentrale Einheit (5) während der Arbeisphasen desselbigen Geräts mit relevanten, kodierten Zustandssignalen in Antwort darauf, welches die zentrale Einheit ansteuert oder nicht ansteuert, um unterbrochen zu werden, entsprechend der programmierten Prioritätsreihenfolge zu betreiben, wobei die Steuersignale zu dem mindestens zu einem Gerät zugeführt werden.

2. Kontrollsystem für elektrische Hausgeräte entsprechend Anspruch 1, in welchem die zentrale Einheit (5) eine infrarote Empfänger-Sender-Einrichtung (7), die angeordnet ist, um in zwei Richtungen mit den korrespondierenden infraroten Sender-Einpfäinger-Einrichtungen (6) zu kommunizieren, welche alle mit einem relevanten Gerät (1-4) assoziert sind, um so die kodierten Signale zu senden und zu empfangen, umfaßt, **gekennzeichnet dadurch, daß** die Sender-Empfänger-Einrichtungen (6,7) angeordnet sind, um durch Reflektion der infraroten Strahlen mit Hilfe einer Referenz-Oberfläche (24) in zwei Richtungen zu kommunizieren.

3. Kontrollsystem für elektrische Hausgeräte entsprechend Anspruch 1, **gekennzeichnet dadurch, daß** die zentrale Einheit (5) mit dem Programmierer von einem der Geräte (1) integriert ist und infrarote Empfänger-Sender-Einrichtungen (7) umfaßt, die angeordnet sind, um mit den korrespondierenden infraroten Senderempfänger-Einrichtung (6) in zwei Richtungen zu kommunizieren, welche alle mit einem relevanten der verbleibenden Geräte (2-4) assoziiert werden, um so die kodierten Signale zu senden und zu empfangen.

## Revendications

1. Système de contrôle pour appareils électroménagers, comprenant une unité centrale de commande programmable (5) et une pluralité d'appareils domestiques (1 -4) qui sont prévus avec des programmateurs électroniques respectifs (8,9) , sont connectables à un réseau d'alimentation électrique et sont capables de réaliser des programmes de fonctionnement appropriés pouvant être sélectionnés, constitués de phases de travail des éléments fonctionnels associés , l'unité centrale étant agencée pour commander les appareils à l'aide de signaux de validation codés leur permettant de fonctionner , selon une séquence de priorité programmée, de façon à maintenir la totalité de la puissance absorbée par les appareils au-dessous d'une valeur maximale prédéterminée , chaque appareil (1-4) comprenant des moyens de commande (8) associés au programmateur respectif et agencés pour commander l'unité centrale (5) par des signaux d'information codés qui sont indicateurs de la puissance demandée par ses éléments fonctionnels pour exécuter la phase de travail suivante d'un programme sélectionné, l'unité centrale (5) étant agencée pour répondre auxdits signaux d'information en commandant par lesdits signaux de validation , selon ladite séquence de priorité programmée , ces appareils (1-4) dont la mise en route réelle pendant la simultanéité des phases de travail respectives suivantes implique une consommation de puissance totale ne dépassant pas ladite valeur maximale, caractérisé en ce que les moyens de commande (8) d'au moins un des appareils (1-4) sont agencés pour commander l'unité centrale (5), pendant lesdites phases de travail du même appareil , par des signaux d'état codés appropriés en réponse auxquels l'unité centrale est, ou n'est pas, validée pour interrompre , selon ladite séquence de priorité programmée, la fourniture des signaux de validation audit au moins un appareil.

2. Système de contrôle pour appareils électroménagers selon la revendication 1 , dans lequel l'unité centrale (5) comprend des moyens d'émetteur-récepteur à infrarouge (7) agencés pour communiquer bi-directionnellement avec des moyens d'émetteurs-récepteurs à infrarouge correspondants (6) qui sont associés, chacun, à un appareil approprié (1-4) de façon à émettre et à recevoir lesdits signaux codés , caractérisé en ce que lesdits moyens d'émetteur-récepteur (6,7) sont agencés pour communiquer bi-directionnellement par réflexion des rayons infrarouges au moyen d'une surface de référence (24).

3. Système de contrôle pour appareils électroménagers selon la revendication 1 , caractérisé en ce que l'unité centrale (5) est intégrée au programmateur de l'un des appareils (1) et comprend des moyens d'émetteur-récepteur à infrarouge (7) agencés pour communiquer de façon bi-directionnelle avec des moyens d'émetteur-récepteur à infrarouge correspondants (6), qui sont associés chacun à un appareil approprié parmi les appareils restants (2-4), de façon à émettre et à recevoir lesdits signaux codés.
